# EUROPÄISCHE PATENTANMELDUNG

(11) **EP 1 116 967 A1**
(43) Veröffentlichungstag der Anmeldung: **18.07.2001**
(21) Anmeldenummer: 00127652.6
(22) Anmeldetag: 18.12.2000
(51) Int. Cl.: G02B 6/125, G02B 6/42, G02B 6/30

(54) **Lichtwellenleiterkoppler**

(30) Priorität: 13.01.2000 CH 612000
(71) Anmelder: Contraves Space AG, 8052 Zürich (CH)
(72) Erfinder: Holzner, Reto, Dr., 8050 Zürich (CH); Brunschwiler, Thomas, 9330 Arbon (CH); Wagner, Josef, 9470 Buchs SG (CH); Dommann, Alex, Prof. Dr., 9470 Buchs SG (CH); Mündle, Andreas, 6822 Satteins (AT); Jütz, Jakob, Prof. Dr., 9472 Grabs SG (CH)
(74) Vertreter: OK pat AG

(57) **Zusammenfassung**

Der Lichtwellenleiterkoppler umfasst eine Struktur **(1)** mit einer Anzahl länglicher schmaler LWL-Streifen **(2)**, die je aus einem Frontbereich **(3)**, einem mittleren Bereich **(4)** und einem Koppelbereich **(5)** bestehen. Der mittlere Bereich **(4)** weist je einen Übergangsbereich **(6)** und **(7)** zum entsprechenden Bereich **(3)** bzw. **(5)** auf. Ein zwischen zwei benachbarten Streifen (2) vorhandener Spalt **(9)** bei den Frontbereichen **(3)** ist grösser als die Dicke der schmalen Streifen **(2).** Die Stirnflächen **(8)** der Frontbereiche **(3)** und die Stirnflächen der Koppelbereiche **(5)** sind möglichst glatt ausgebildet, wobei im Koppelbereich **(5)** alle Streifen einen Stapel bilden. Die Spalten sind Gruben, die sich durch Ätzen eines Si-Substrats mit Hilfe eines DRIE-Ätzverfahrens ergeben.

## Beschreibung

Die vorliegende Erfindung betrifft einen Lichtwellenleiterkoppler nach dem Oberbegriff des Patentanspruchs **1.**

Aus der Patentschrift **US 5,343,546** ist eine Struktur von Lichtwellenleitern dieser Art bekannt. Bei dieser Ausführung sind die einzelnen Lichtwellenleiter ohne Substrat gehalten, wobei jeder einzelne Lichtwellenleiter für sich derart verdreht ist, dass es sich dadurch ein Übergang von einer vertikaler zu einer horizontaler Lage ergibt.

Ein Verfahren zur Herstellung von optischen Fasern ist ferner aus der Patentschrift **US 5,173,097** bekannt. Nach diesem Verfahren werden optische Fasern mit sehr kleinen Dimensionen durch Ziehen der Fasern in plastischem Zustand hergestellt. Die dünnen Fasern können dann in gestapelter Form für konkrete Anwendungen, wie beispielsweise zur Herstellung von Lichtwellenleiterkopplern eingesetzt werden.

Ein weiteres Verfahren zur Herstellung von Lichtwellenleitern ist aus der im Prioritätsintervall veröffentlichten Patentschrift **US 5,963,687** bekannt. Nach diesem Verfahren wird ein Glas erzeugendes Material mit Hilfe einer sehr dünnen Flamme auf einem Substrat deponiert, um eine Schicht zu bilden, deren Dicke durch eine geeignete relative Bewegung zwischen Flamme und Substrat erreicht wird.

Bei miniaturisierten optischen Systemen werden manchmal Lichtwellenleiterkoppler eingesetzt. Solche **LWL**-Koppler sind Bauelemente, die es ermöglichen, das von einer Anzahl n Sendelemente, insbesondere Laserdioden, emittiertes Licht in mindestens einen Lichtwellenleiter einzukoppeln. Ein solcher **LWL**-Koppler kann beispielsweise eine Anzahl n Eingänge und einen einzigen Ausgang aufweisen. Bei den bekannten **LWL**-Kopplern sind diese Eingänge und Ausgänge für sich bestehende Lichtwellenleiter. Solche **LWL**-Koppler machen erst eine Miniaturisierung möglich, denn in der Praxis ist es nicht möglich, auf einem sehr kleinen Raum eine Anzahl n emittierende Diodenflächen zum Beispiel über ein Linsen- und Spiegelsystem auf den Kerndurchmesser eines Ausgangslichtwellenleiters abzubilden.

Derartige **LWL**-Koppler arbeiten an sich sehr gut, sind jedoch relativ aufwendig. Es ist daher Aufgabe der Erfindung einen **LWL**-Koppler zu schaffen, der weniger aufwendig ist.

Diese Aufgabe wird in vorteilhafter Weise erfindungsgemäss durch einen **LWL**-Koppler nach Patentanspruch **1** gelöst.

Der erfindungsgemässe **LWL**-Koppler vereinigt in vorteilhafter Weise die Lichtleistung von n Sendeelementen grundsätzlich ohne Leistungsverluste. Durch die Erfindung lässt sich daher der Aufwand baulicher Art für derartige System signifikant reduzieren, was schliesslich die Realisierung von Mikrosystemen erlaubt.

Andere vorteilhafte Ausführungen der Erfindung ergeben sich aus den weiteren abhängigen Ansprüchen.

Die Erfindung wird nachfolgend beispielsweise an Hand einer Zeichnung näher erläutert. Es zeigt:
- **Fig. 1**: eine schematische Darstellung einer bevorzugten Struktur des erfindungsgemässen **LWL**-Kopplers,
- **Fig. 2**: einen schematischen Schnitt durch alle Frontbereiche einer ersten Ausführung einer solchen Struktur, die nach der Erfindung auch positive Struktur genannt wird,
- **Fig. 3**: einen schematischen Schnitt durch alle Frontbereiche einer zweiten Ausführung einer solchen Struktur, die nach der Erfindung auch negative Struktur genannt wird,
- **Fig. 4**: eine schematische Darstellung von zwei nebeneinander angeordneten Streifen einer positivem Struktur,
- **Fig. 5**: eine schematische Seitenansicht eines Substrats für einen erfindungsgemässen **LWL**-Koppler, und
- **Fig. 6**: eine schematische Draufsicht dieses Substrats.

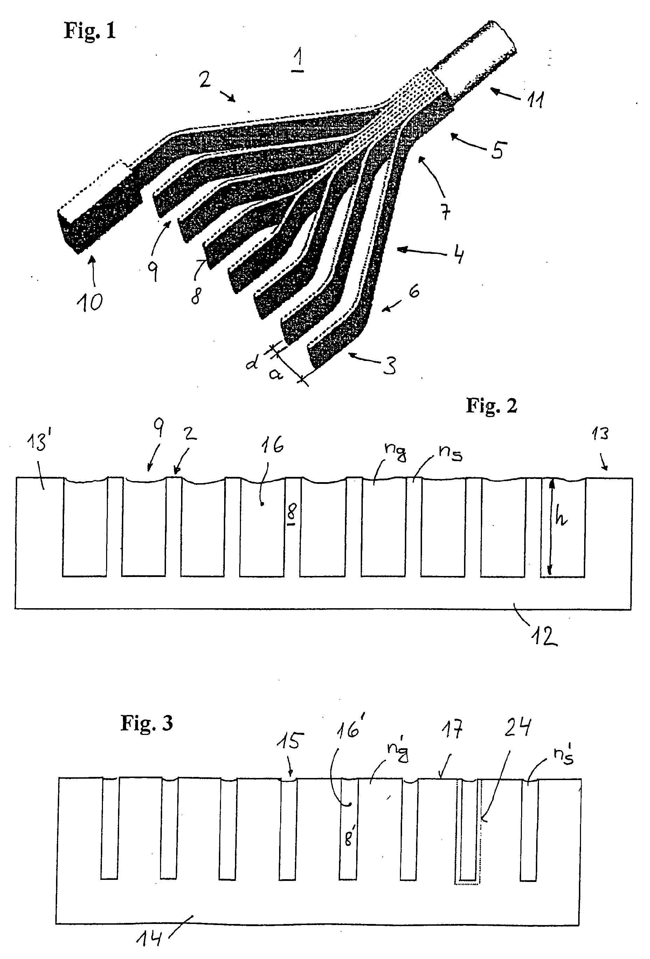

Die in **Fig. 1** dargestellte Struktur **1** eines **LWL**-Kopplers nach der Erfindung umfasst eine Anzahl n = 8 längliche schmale **LWL**-Streifen **2,** die bezüglich einer Referenzebene paarweise symmetrisch angeordnet sind. Diese Streifen **2** sind lichtdurchlässig und weisen einen Brechungsindex **ns** auf. Jeder Streifen weist einen Frontbereich **3,** einen mittleren Bereich **4** und einen Koppelbereich **5** auf. Der mittlere Bereich **4** umfasst je einen Übergangsbereich **6** und **7** zum entsprechenden Endbereich **3** bzw. **5**. Die Frontbereiche **3** aller Streifen bilden derart zur Referenzebene parallele Ebenen, dass dort der Spalt **a** zwischen zwei benachbarten Streifen merklich grösser als die Dicke **d** der schmalen Streifen **2** ist. Die Dicke **d** kann beispielsweise 5 µm und der Spalt **a** 1 bis 4 mm gross sein. Der Krümmungsradius der Übergangsbereiche **6** und **7** ist vorzugsweise grösser als **5·d.** Die Koppelbereiche **5** aller Streifen bilden ebenfalls parallele Ebenen, jedoch so, dass dort der Spalt zwischen zwei benachbarten Streifen eher kleiner, vorzugsweise verschwindend klein und auf jeden Fall nicht viel grösser als die Dicke **d** der schmalen Streifen **2** ist. Die Stirnflächen **8** der Frontbereiche **3**, die möglichst flach ausgebildet sind, befinden sich in einer zur Referenzebene senkrechten Ebene. Die Koppelbereiche **5** aller Streifen sind seitlich parallel nebeneinander gestapelt und miteinander verbunden, und die Stirnflächen dieser Koppelbereiche **5**, die ebenfalls möglichst flach ausgebildet sind, befinden sich auch in einer weiteren zur Referenzebene senkrechten Ebene.

Die Streifen **2** können aus einem für ein gewünschtes Frequenzspektrum lichtdurchlässigen Material bestehen. Für einige Anwendungen sind Silizium-Plättchen besonders gut geeignet, die sonst auch als Substrat **12** (**Fig. 2**) dient. Zwischen den Streifen **2** sind Räume **9**, die auch Interstitien genannt werden, vorhanden, die sozusagen bis zu ihrer Konfluenz in den Bereichen **5** mit einem Füllmaterial bzw. mit einem geeigneten härtenden Füllstoff ausgefüllt sein können, beispielsweise einem Klebstoff, Photolack, Polymer usw.

Das System nach **Fig. 1** umfasst je ein Sendeelement für jeden **LWL**-Streifen **2**, wobei in der Figur nur ein Sendeelement **10** dargestellt ist. Die Leuchtflächen dieser Sendeelemente **10**, die beispielsweise Diodenlaser sein können, sind jeweils gegenüber einer Stirnfläche **8** eines Frontbereiches **3** eines Streifens **2** angeordnet. Die Stirnfläche eines Ausgangs-Lichtwellenleiters oder vorzugsweise einer Lichtwellenfaser **11** ist gegenüber den Stirnflächen der Koppelbereiche **5** aller Streifen angeordnet. Der Durchmesser **D** der Lichtwellenfaser **11** ist somit etwa gleich der Höhe **h** der Streifen **2**, die beispielsweise 100 µm sein kann.

**Fig. 2** zeigt einen Querschnitt senkrecht durch die Frontbereiche **3** einer positiven Struktur eines **LWL-**Kopplers mit dem Substrat **12** und acht beispielsweise durch Ätzen gebildeten Streifen **2** und zwei inaktiven Randseiten **13, 13'**, die somit auch entfallen können. In diesem Fall sind die Interstitien **9** beispielsweise mit einem Klebstoff **16** ausgefüllt. Die längliche Fläche **8** in **Fig. 2** stellt die Stirnfläche eines **LWL**-Streifens dar, die in nahem Kontakt mit einem Sendeelement **10** liegt. Im Bereich **5** sind die Interstitien selbstverständlich viel enger als in der Darstellung nach **Fig. 2**.

**Fig. 3** zeigt einen Querschnitt senkrecht durch entsprechende Frontbereiche einer negativen Struktur eines **LWL**-Kopplers mit einem Substrat **14** und acht beispielsweise durch Ätzen gebildeten Gruben **15**, die mit einem lichtdurchlässigen Klebstoff ausgefüllt werden können, der in diesem Fall das Material der **LWL**-Streifen **16'** bildet. Die Stirnflächen **8'** der **LWL**-Streifen **16'** verlaufen parallel zur Zeichnungsebene und sind glatt. Dies kann man durch polieren oder giessen erreichen. Da diese Stirnflächen in nahem Kontakt mit je einem Sendeelement **10** liegen, kann das Licht durch die **LWL**-Streifen gelangen. Im Bereich **5 (Fig. 1)** sind die Wandungen **17** zwischen den Gruben **15** selbstverständlich viel enger als im Bereich **3** (**Fig. 3**).

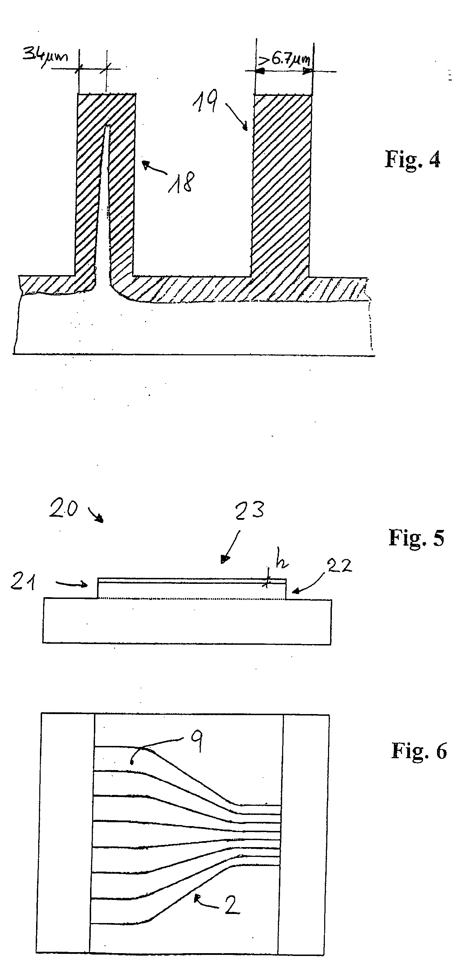

Aus den Figuren **2** und **3** ist ersichtlich, dass die Streifen **2** bzw. **16'** und die Diodenlaser **10** vertikal zur Grundfläche des Substrats 12 bzw. 14 angeordnet sind. Die **LWL**-Streifen **2** werden beispielsweise aus Silizium mit einer Höhe von vorzugsweise 30 bis 300 µm und einer Dicke von 0.6 µm bis 10 µm, insbesondere 100 x 2 µm ausgebildet. Bei der positiven Struktur kann dieser Siliziumstreifen durchoxidiert sein, so dass solche Streifen dann grundsätzlich aus SiO₂ bestehen, was ein sehr gut lichtdurchlässiges Material ist. **Fig. 4** zeigt schematisch einen Si-Streifen **18**, der nicht vollständig durchoxidiert ist, und einen Si-Streifen **19**, der vollständig durchoxidiert ist.

Ein **LWL**-Koppler mit einer erfindungsgemässen Struktur nach den Figuren 1 bis 4 funktioniert folgendermassen:
Das emittierte Licht jedes der n Sendeelemente wird mit oder ohne optische Abbildung stirnseitig in einen der **LWL**-Streifen **2** eingekoppelt, und zwar in der Darstellung nach den Figuren 2 oder 3 in die Stirnflächen **8** bzw. **8'** senkrecht zur Zeichnungsebene. Querschnittsform und Querschnittsfläche eines jeden **LWL**-Streifens entsprechen, bis auf zu definierende Abweichungen, der emittierenden Fläche eines der **n** Sendelemente **10**. Die Stirnflächen aller n parallelgeführten **LWL**-Streifen im Koppelbereich **5** plus die Abstände zwischen ihnen bilden eine Fläche, die als Koppelfläche bezeichnet wird und die stirnseitig mit dem Ausgangs-Lichtwellenleiter, vorzugsweise jedoch mit einer Lichtwellenfaser **11** (**Fig. 1**) verbunden werden kann. Das von den Sendeelementen emittierte Licht wird über alle Streifen geleitet, so dass die Lichtleistung am Lichtwellenleiter **11** viel grösser als der eines einzelnen Sendeelements ist. Diese Lichtleistung kann beispielsweise auch grösser als **0.7· n** sein. Da die Interstitien **9'** an den Frontenden der **LWL**-Streifen (**Fig. 1**) relativ gross sind, bietet diese Seite des **LWL**-Kopplers genügend Platz, um die Diodenlaser und die relativ grösseren dazugehörigen Elemente unterbringen zu können, da die Diodenlaser auch elektrisch gespeist werden müssen und daher eine gewisse Wärme ausstrahlen, beispielsweise in der Grössenordnung von 3 Watt pro Diode, welche abgeführt werden muss. Zur Kühlung der Dioden können beispielsweise geklebte sogenannte Diamant-Flächen oder Kupfer-Blöcke in der Grösse 1mm x 2 bis 3 mm verwendet werden.

Zur Herstellung eines **LWL**-Kopplers nach der Erfindung kann man beispielsweise, wie in **Fig. 5** dargestellt, von einem Silizium-Plättchen oder Wafer **20** mit zwei Schultern **21** und **22** ausgehen, zwischen denen sich ein etwas erhöhter mittlerer Bereich **23** befindet. Bei einer positiven Struktur wird in einer ersten Verfahrensstufe durch Ätzen nach einer an sich bekannten Technologie die gewünschte Anzahl Streifen **2** in Form von vertikalen Wänden hergestellt. In **Fig. 6** sind beispielsweise acht solche Streifen dargestellt. In einer zweiten Verfahrensstufe werden diese nach oben herausragenden Wände oxidiert, vorzugsweise durchoxidiert, wobei auch das Substrat **12** teilweise oxidiert wird, was unproblematisch ist und sogar erwünscht sein kann. Anderenfalls kann durch eine geeignete Abdeckung die Oxidation des Substrats vermieden werden. Die oxidierten Zonen, die in **Fig. 4** schraffiert dargestellt sind, bestehen aus SiO₂ und sind daher gut lichtdurchlässig. In einer dritten Verfahrensstufe werden dann die Interstitien **9** mit einem Füllmaterial, beispielsweise einem Klebstoff ausgefüllt, wodurch die Struktur eine grosse Beständigkeit erhält. In einer vierten Verfahrensstufe werden schliesslich die Stirnflächen des Frontbereiches **3** bei der Schulter **21** und die Stirnflächen des Koppelbereiches bei der Schulter **22** poliert. Jede dieser Verfahrensstufen kann mehrere Verfahrensschritte jeweils nach einer anderen an sich bekannten Technologie umfassen. Die Schultern **21** und **22**, die auch entfallen können, sind als Hilfe für die Montage der Dioden **10** an der Frontseite und der Lichtfaser **11** an der Ausgangsseite vorgesehen.

Bei einer negativen Struktur wird in einer ersten Verfahrensstufe durch Ätzen nach einer an sich bekannten Technologie die gewünschte Anzahl Streifen **2** in Form von vertikalen Gruben hergestellt. In **Fig. 6** können beispielsweise die acht Bahnen **2** als Gruben interpretiert werden. In einer zweiten Verfahrensstufe werden die Oberflächen dieser nach unten gerichteten Gruben nur sehr leicht behandelt. Diese behandelten Zonen **24** sind in **Fig. 3** angedeutet. In einer dritten Verfahrensstufe werden dann diese Gruben **2** mit einem lichtdurchlässigen Füllmaterial **16'**, beispielsweise einem Klebstoff ausgefüllt, wodurch die eigentlichen **LWL**-Streifen entstehen. In einer vierten Verfahrensstufe werden schliesslich die Frontseiten bei der Schulter **21** und die Stirnflächen bei der Schulter **22** poliert. Jede dieser Verfahrensstufen kann mehrere Verfahrensschritte jeweils nach einer anderen an sich bekannten Technologie umfassen. Auch in diesem Fall können die Schultern **21** und **22** entfallen, die an sich als Beispiel einer Hilfe für die Montage der Dioden **10** an der Frontseite und der Lichtfaser **11** an der Ausgangsseite vorgesehen sind.

Um eine Totalreflexion zu bewirken, kann das Füllmaterial **16** mindestens im Grenzbereich neben einem lichtdurchlässigen Streifen **2** einen Brechungsindex **n**_{**g**} < **n**_{**s**} aufweisen. Im Fall einer negativen Struktur hat die Grenzschicht **24** (**Fig. 3**) neben einem lichtdurchlässigen Streifen **16'** aus einem Füllmaterial mit einem Brechungsindex **n**_{**s**}**'** ebenfalls einen Brechungsindex **n**_{**g**}**'** < **n**_{**s**}**'.**

Im allgemeinen ist es sehr schwierig hohe schmale Wände **2** (**Fig. 2**) herzustellen. Durch die Erfindung wurde jedoch die Erkenntnis gewonnen, dass durch ein sogenanntes DRIE-Ätzen (Deep Reactive Ion Etching) möglich ist, solche Wände oder Streifen mit einer Höhe von etwa 100 µm und einer Breite von etwa 5 µm für die vorliegende Anwendung herzustellen, um beispielsweise Diodenlaser mit einer Leuchtfläche von 100 x 1 µm verwenden zu können.

Bezüglich der Duchoxidation wurde durch die Erfindung im Zusammenhang mit dieser Anwendung ebenfalls die Erkenntnis gewonnen, dass durch Verwendung einer sogenannten Feucht-Oxidation bei hoher Temperatur - etwa 1200°C - Oxiddicken bis zu 3.4 µm (bzw. > 6.7 µm) erreichbar sind. Die Oxiddicke hängt von der Zeit ab, die zur Verfügung steht. Der als Mantel dienende Klebstoff **16** hat vorzugsweise einen Brechungsindex von 1.4 und ist somit kleiner als 1.46 ( = Brechungsindex vom SiO₂). Bei einer negativen Struktur kann durch die Oberflächenbehandlung der Gruben **15** (**Fig. 3**) eine Grenzschicht **24** aus SiO₂ erzeugt werden, falls man beispielsweise den Klebstoff 103 der Firma Epoxy verwendet, der einen Brechungsindex von 1.57 aufweist. Die Oberflächenbehandlung kann jedoch auch beispielsweise mit Hilfe eines sogenannten PECVD-Verfahrens (Plasma Enhanced Chemical Vapour Deposition) erfolgen, das eine Gasentladung nutzt, um dünne Schichten bei niedriger Temperatur aus der Gasphase, insbesondere Schichten aus Siliziumnitrid oder Siliziumoxinitrid abzuscheiden. Der Brechungsindex der sogenannten SION-Schichten, die durch Substitution von Distickstoff durch Ammoniak entstehen, kann z.B. im Bereich zwischen 1.46 und 2 gewählt werden und ist somit im unteren Bereich kleiner als der Brechungsindex (1.57) des erwähnten Klebstoffs 103. Der Klebstoff muss im Hinblick auf verschiedene Kriterien gewählt werden. Erwünscht sind insbesondere eine geringe Dämpfung der Lichtleistung bei der gewünschten Wellenlänge, ein geeigneter Brechungsindex, eine kleine Viskosität zur Vergiessung, eine relativ grosse Härte und ein geringer Schwund. Die Klebstoffe OG 136 und/oder 103 der Firma EPO-TEK beispielsweise erfüllen diese Bedingungen. Für das Vergiessen des Klebstoffes können Gussformen aus Teflon verwendet werden.

Vorzugsweise sind die Stirnflächen **8** der Frontbereiche **3** und/oder und die Stirnflächen der Koppelbereiche **5** des Lichtwellenleiterkopplers möglichst flach und glatt ausgebildet. Diese Stirnflächen können sich in einer zur Referenzebene senkrechten Ebene befinden. Die länglichen schmalen **LWL**-Streifen **2** können bezüglich der Referenzebene paarweise symmetrisch angeordnet sein.

Die Lichtwellenleiterkoppler können positive und/oder negative Streifen **2, 16'** mit einer Höhe zwischen **30** und **300** µm und einer Dicke zwischen **1** und **30** µm sein, vorzugsweise jedoch mit einer Höhe zwischen **80** und **120** µm und einer Dicke zwischen **2** und **8** µm.

## Patentansprüche

1. Lichtwellenleiterkoppler mit einer Anzahl länglicher schmaler **LWL**-Streifen (**2**)**,** die je einen Frontbereich (**3**), einen mittleren Bereich (**4**) und einen Koppelbereich (**5**) aufweisen, indem der mittlere Bereich (**4**) je einen Übergangsbereich (**6, 7**) zum entsprechenden Frontbereich (**3**) bzw. Koppelbereich (**5**) umfasst, derart, dass der Abstand (**a**) zwischen zwei benachbarten Streifen im Frontbereich (**3**) grösser als die Dicke (**d**) der schmalen Streifen (**2**) ist, und wobei im Koppelbereich (**5**) die Streifen einen Stapel bilden, **dadurch gekennzeichnet, dass** der Lichtwellenkoppler durch eine Struktur auf einem Substrat (**12; 14**) mit Gruben (**16; 16'**) und Streifen (**2; 17**) zwischen den Gruben (**16; 16'**) gebildet ist, und dass die Streifen als **LWL**-Streifen mindestens teilweise aus dem Material (**2**) des Substrats bestehen oder dass in den Gruben ein lichtwellenleitendes die **LWL**-Streifen bildendes Material (**16'**) eingebettet ist.

2. Lichtwellenleiterkoppler nach Anspruch **1**, **dadurch gekennzeichnet, dass** die Gruben durch Ätzen des Substrats realisiert sind, vorzugsweise durch ein **DRIE**-Ätzverfahren.

3. Lichtwellenleiterkoppler nach Anspruch **1** oder **2**, **dadurch gekennzeichnet, dass** positive und/oder negative Streifen **(2; 16')** mit einer Höhe zwischen **30** und **300** µm und einer Dicke zwischen **1** und **30** µm in einem Substrat vorhanden sind, das vorzugweise aus Silizium besteht.

4. Lichtwellenleiterkoppler nach einem der Ansprüche **1** bis **3**, **dadurch gekennzeichnet, dass** positive Streifen (**18; 19**) mindestens teilweise aus Siliziumoxid und/oder oder negative Streifen (**16'**) aus einem Füllstoff vorhanden sind.

5. Lichtwellenleiterkoppler nach einem der Ansprüche **1** bis **4**, **dadurch gekennzeichnet, dass** die Gruben zwischen den Streifen (**2**) mit einem Füllmaterial (**16**) ausgefüllt sind.

6. Lichtwellenleiterkoppler nach einem der Ansprüche **3** bis **4**, **dadurch gekennzeichnet, dass** das Substrat (**12**) mindestens eine Schulter (**21; 22**) als Stütze für wenigstens zwei Lichtsendeelemente (**10**) und/oder eine Lichtwellenfaser (**11**) umfasst.

7. Verfahren zur Herstellung eines Lichtwellenleiterkopplers nach einem der Ansprüche **1** bis **6**, **dadurch gekennzeichnet, dass** zur Herstellung einer positiven Struktur in einer ersten Verfahrensstufe durch Bildung von Gruben in einem Substrat eine gewünschte Anzahl Streifen (**2**) mit seitlichen Wänden (**18; 19**) zwischen den Gruben (**9**) hergestellt wird, und dass in einer weiteren Verfahrensstufe die Gruben (**9**) mit einem Füllmaterial (**16**) ausgefüllt werden,
oder dass zur Herstellung einer negativen Struktur in einer ersten Verfahrensstufe eine der gewünschten Anzahl Streifen entsprechende Anzahl Gruben in einem Substrat hergestellt wird, und dass in einer weiteren Verfahrensstufe diese Gruben (2) mit einem lichtdurchlässigen Füllstoff (**16**') ausgefüllt werden, wodurch die eigentlichen **LWL**-Streifen entstehen.

8. Verfahren nach Anspruch **7, dadurch gekennzeichnet, dass** in einer zweiten Verfahrensstufe vor der weiteren Verfahrensstufe diese Wände (**18; 19**) seitlich chemisch behandelt werden oder die Oberflächen dieser Gruben nur leicht chemisch behandelt werden, um die Rauigkeit der Oberfläche zu reduzieren.

9. Verfahren nach einem der Ansprüche **7** bis **8**, **dadurch gekennzeichnet, dass** in einer vierten Verfahrensstufe die Stirnflächen der Streifen im Frontbereich (**3**) und/oder im Koppelbereich (**5**) poliert werden.

10. Verfahren nach einem der Ansprüche **7** bis **9**, **dadurch gekennzeichnet, dass** die Gruben durch Anwendung eines **DRIE**-Ätzverfahrens hergestellt werden.

11. Verfahren nach einem der Ansprüche **7** bis **10**, **dadurch gekennzeichnet, dass** eine Durchoxidation der Streifen durch Verwendung eines Feucht-Oxidations-Verfahrens bei hoher Temperatur bewirkt wird.

12. Verfahren nach einem der Ansprüche **7** bis **11**, **dadurch gekennzeichnet, dass** eine Oberflächenbehandlung der Gruben mit Hilfe eines **PECVD**-Verfahrens durchgeführt wird, um dünne Grenzschichten zu erzeugen.

13. Verfahren nach einem der Ansprüche **7** bis **12**, **dadurch gekennzeichnet, dass** ein Füllstoff mit einem Brechungsindex von zumindest angenähert **1.4** oder ein Füllmaterial mit einem Brechungsindex von zumindest angenähert **1.57** verwendet wird.

14. Verfahren nach einem der Ansprüche **7** bis **13**, **dadurch gekennzeichnet, dass** die Grenzschichten der Streifen durch Anwendung eines **SION**-Verfahrens hergestellt werden, derart, dass es sich dort ein Brechungsindex ergibt, der kleiner als **1.57** ist.
